# EUROPÄISCHE PATENTSCHRIFT

(11) **EP 3 375 957 B1**
(45) Veröffentlichungstag und Bekanntmachung des Hinweises auf die Patenterteilung: **19.02.2020**
(21) Anmeldenummer: 17161677.4
(22) Anmeldetag: 17.03.2017
(51) Int. Cl.: E05B 47/02, E05B 47/00, E05B 15/02

(54) **ZUHALTEVORRICHTUNG**
LOCKING DEVICE
DISPOSITIF DE BLOCAGE

(43) Veröffentlichungstag der Anmeldung: 19.09.2018
(73) Patentinhaber: EUCHNER GmbH + Co. KG, 70771 Leinfelden-Echterdingen (DE)
(72) Erfinder: Häußler, Johannes, 73087 Bad Boll (DE)
(74) Vertreter: Ruckh, Rainer Gerhard

(56) Entgegenhaltungen:
- EP-A1- 2 679 750
- EP-A1- 3 029 226
- WO-A1-87/04213
- WO-A1-2015/028106
- DE-A1- 3 049 091
- DE-U1- 9 011 080

## Beschreibung

Die Erfindung betrifft eine Zuhaltevorrichtung gemäß dem Oberbegriff des Anspruchs 1.

Im Bereich der Sicherheitstechnik werden Sicherheitsschalter bekanntlichermaßen zur Sicherung von Zugängen von Gefahrenbereichen eingesetzt. Beispielsweise kann mit einem Sicherheitsschalter eine Verriegelung einer Schutztür als Zugang zu einem Gefahrenbereich abgesichert werden. Der Betrieb einer gefahrbringenden Anlage innerhalb des Gefahrenbereichs wird von einer Sicherheitssteuerung nur dann freigegeben, wenn mit dem Sicherheitsschalter die Schutztür verriegelt ist. Dem Sicherheitsschalter ist hierbei ein Betätiger zugeordnet. Dabei kann typischerweise der Betätiger an der Schutztür angeordnet sein, während der Sicherheitsschalter an einem die Türöffnung begrenzenden Rahmen angeordnet ist.

Zur Verriegelung der Schutztür wird, wenn sich die Schutztür in ihrer Schließstellung befindet, der Betätiger in Eingriff mit dem Sicherheitsschalter gebracht, indem beispielsweise der Betätiger in eine Aussparung eingefahren wird. Diese Verriegelung wird dadurch kontrolliert, dass mit einem RFID-Lesegerät im Sicherheitsschalter ein Transponder im Betätiger erkannt wird.

Zusätzlich zu dieser Verriegelung kann eine Zuhaltung der Schutztür vorgesehen sein. Eine derartige Zuhaltung ist beispielsweise aus der WO 2016/058718 A1 bekannt. Bei dieser Zuhaltung ist ein Zuhaltebolzen vorgesehen, der mittels eines Elektromotors mit einem Planetengetriebe betätigt wird. Mit dem elektrischen Antrieb kann der Zuhaltebolzen in eine Sperrstellung verfahren werden, in der der Betätiger mit dem Zuhaltebolzen zugehalten wird.

Die DE 30 49 091 A1 betrifft ein elektromechanisches Schloss, insbesondere für Koffer, Taschen und andere tragbare Behälter, welches im Wesentlichen aus einem Schließteil und einem Einhak- oder Einrastteil, einem Schließblech oder dergleichen besteht. In das Schließteil ist zusätzlich ein längs verschiebbarer, elektromechanisch angetriebener Sperrriegel eingefügt, der in der Sperrstellung das Öffnen des Schlosses verhindert und der durch elektrische Impulse, die mit Hilfe einer Decodierschaltung auslösbar sind, betätigbar ist.

Die DE 90 11 080 U1 betrifft ein elektrisches Verriegelungselement für Schlösser, mit einer von einem elektrischen Betätigungselement betätigten Sperre. Das elektrische Betätigungselement ist ein Elektromotor, der über ein Spindelgetriebe die Sperre betätigt.

Die EP 2 679 750 A1 betrifft eine Verriegelungsvorrichtung. Bei dieser Vorrichtung ist ein Elektromotor vorgesehen, der eine Spindel antreibt, die mit einem Sperrelement verbunden ist. Das Sperrelement ist in einer Nut im Gehäuse der Vorrichtung geführt, so dass die Drehbewegung des Elektromotors in eine Translationsbewegung des Sperrelements umgesetzt ist.

Die WO 87/04213 A1 betrifft eine Schließvorrichtung mit einem Elektromotor und einer Spindel, deren Drehbewegung über einen Querstift, der in einer stationären Längsführung zwangsgeführt ist, eine Translationsbewegung eines Sperrelements generiert.

Der Erfindung liegt die Aufgabe zugrunde, eine Zuhaltevorrichtung der eingangs genannten Art bereitzustellen, welche eine hohe Funktionalität aufweist.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft eine Zuhaltevorrichtung mit einem mittels eines elektrischen Antriebs betätigbaren Zuhalteelement. Mittels des elektrischen Antriebs ist das Zuhalteelement in eine Sperrstellung derart einbringbar, dass ein Betätiger eines Sicherheitsschalters mit diesem zugehalten werden kann. Das Zuhalteelement ist mit dem elektrischen Antrieb über eine Kupplung so verbunden, dass eine Drehbewegung des elektrischen Antriebs in eine reine Translationsbewegung des Zuhalteelements umgesetzt ist. Die Kupplung weist einen Querstift und einen quer zu diesem verlaufenden Zylinderstift auf, wobei der Querstift in einer Längsführung geführt ist, und wobei der Zylinderstift den Querstift sichert. Mit der Kupplung zwischen dem Zuhalteelement und dem elektrischen Antrieb in axialer Richtung ist eine drehsteife und spielfreie Kopplung bewirkt und in lateraler Richtung ist ein Toleranzausgleich dieser Einheiten bewirkt. Die Längsachsen des Querstifts und des Zylinderstifts verlaufen quer zur Längsachse des Zuhalteelements. Der Querstift ist mit Spiel in einer Aufnahme des Zuhalteelements gelagert und der Zylinderstift ist mit Spiel in einer Aufnahme des Querstifts gelagert.

Mit der erfindungsgemäßen Zuhaltevorrichtung wird eine sichere und zuverlässige Zuhaltung des Betätigers eines Sicherheitsschalters gewährleistet. Dabei besteht ein wesentlicher Aspekt der Erfindung darin, dass mit der Kupplung und vorzugsweise einer Spindelmutter an einer vom elektrischen Antrieb angetriebenen Spindel eine Umsetzung der Drehbewegung des elektrischen Anriebs in eine reine Translationsbewegung des Zuhalteelements umgesetzt wird. Dies bedeutet, dass bei der Durchführung von Stellbewegungen des Zuhalteelements, bei welchen dieses zwischen einer Sperrstellung und einer Freigabestellung bewegt wird, der Hubbewegung keine störende Drehbewegung des Zuhalteelements überlagert ist. Weiterhin ist vorteilhaft, dass sich mit der erfindungsgemäßen Zuhaltevorrichtung ein großer Hub des Zuhalteelements und dabei auch hohe Zuhaltekräfte realisieren lassen, sodass auch für unterschiedliche Ausbildungen von Betätigern und Zuhalteelementen eine zuverläsige Zuhaltung realisiert werden kann.

Mit der erfindungsgemäßen Zuhaltevorrichtung ist eine bistabile Zuhaltung durchführbar. Mittels des elektrischen Antriebs ist das Zuhalteelement in die Sperrstellung einführbar. In dieser greift das Zuhalteelement in eine Aufnahme des Betätigers wodurch die Zuhaltung bewirkt ist. Mittels des elektrischen Antriebs kann das Zuhalteelement wieder aus der Sperrstellung ausgefahren werden.

Bei dieser bistabilen Zuhaltung erfolgt die Bewegungssteuerung des Zuhalteelements komplett über den elektrischen Antrieb. Um den Betätiger mit dem Zuhalteelement zuhalten zu können, wird mittels des elektrischen Antriebs das Zuhalteelement vorab in seine Freigabestellung verfahren, sodass der Betätiger mit seiner Aufnahme ungehindert in den Bereich des Zuhalteelements eingebracht werden kann. Dann wird mittels des elektrischen Antriebs das Zuhalteelement in die Sperrstellung verfahren, wodurch die Zuhaltung realisiert ist.

Die Funktionalität der erfindungsgemäßen Zuhaltevorrichtung ist dadurch noch erweitert, dass diese Entkopplungsmittel aufweist, mittels derer das Zuhalteelement vom elektrischen Antrieb entkoppelt gegen eine Federkraft aus der Sperrstellung heraus bewegbar ist.

Damit wird eine mechanische Entriegelung der Zuhaltevorrichtung ermöglicht, was für eine Fluchtentriegelung derart genutzt werden kann, dass dann, wenn mit der Zuhaltevorrichtung zum Beispiel eine Schutztür zugehalten wird, die den Zugang zu einem Gefahrenbereich versperrt, eine Person, die sich im Gefahrenbereich aufhält, die Schutztür manuell entriegeln kann um sich aus dem Gefahrenbereich entfernen zu können. Generell kann die mechanische Entriegelung auch von der Außenseite der Schutztür, also von einer Person außerhalb des Gefahrenbereichs betätigt werden um eine Hilfsentriegelung bei einem Einsichtbereich der jeweiligen Sicherheitseinrichtung oder eine Notentsperrung der Schutztür durchzuführen.

Gemäß einer besonders vorteilhaften Ausgestaltung der Erfindung werden die Entkopplungsmittel zur Realisierung einer Fangfunktion genutzt.

Hierbei ist die Fangfunktion dadurch realisiert, dass mittels eines Eingriffselements des Betätigers das Zuhalteelement mechanisch und entkoppelt vom elektrischen Antrieb aus einer Sperrstellung herausbewegt ist. Wenn die Aufnahme des Betätigers im Bereich des Zuhalteelements liegt, ist dieses durch die Federkraft in die Sperrstellung zurückbewegt und greift in die Aufnahme des Betätigers.

Diese Fangfunktion stellt eine Alternative zur bistabilen Zuhaltung dar. Im Gegensatz zur bistabilen Zuhaltung wird bei der Fangfunktion die Bewegung des Zuhalteelements nicht komplett vom elektrischen Antrieb gesteuert. Vielmehr werden die Entkopplungsmittel für eine mechanische Entkopplung mitgenutzt.

Besonders vorteilhaft ist die Zuhaltevorrichtung wahlweise mit einer bistabilen Zuhaltung oder einer Fangfunktion betreibbar.

Dabei ist die Funktionalität der bistabilen Zuhaltung oder der Fangfunktion durch eine Softwareversion der Zuhaltevorrichtung definiert oder durch einen Programmierbefehl vorgebbar.

Damit wird die Funktionalität der erfindungsgemäßen Zuhaltevorrichtung erheblich erhöht.

Erfindungsgemäß weist die Kupplung einen Querstift und einen quer zu diesem verlaufenden Zylinderstift auf, wobei der Querstift in einer Längsführung geführt ist und wobei der Zylinderstift den Querstift sichert.

Die so ausgebildete Kupplung weist einen sehr einfachen Aufbau mit wenigen Teilen auf.

Dabei wird mit der Kupplung zwischen dem Zuhalteelement und dem elektrischen Antrieb in axialer Richtung eine drehsteife und spielfreie Kopplung bewirkt. In lateraler Richtung wird ein Toleranzausgleich dieser Einheiten bewirkt.

Hierzu verlaufen die Längsachsen des Querstifts und des Zylinderstifts quer zur Längsachse des Zuhalteelements, wobei der Querstift mit Spiel in einer Ausnehmung des Zuhalteelements gelagert ist und wobei der Zylinderstift mit Spiel in einer Ausnehmung des Querstifts gelagert ist.

Durch die spielfreie und drehsteife Kopplung zwischen elektrischem Antrieb und Zuhalteelement wird eine exakte und reproduzierbare Stellbewegung des Zuhalteelements erzielt. Dieser Vorteil wird kombiniert mit dem weiteren Vorteil eines lateralen Toleranzausgleichs, der mit der Kupplung bewirkt wird. Dadurch ist die erfindungsgemäße Zuhaltung unempfindlich gegen unvermeidliche Bauteiltoleranzen, wodurch die Funktionssicherheit der Zuhaltevorrichtung erhöht wird.

Gemäß einer zweckmäßigen konstruktiven Ausgestaltung weist der elektrische Antrieb einen Elektromotor mit einem Planetengetriebe auf. Abtriebsseitig ist am elektrischen Antrieb eine Spindel vorgesehen, die durch die Drehbewegung des elektrischen Antriebs eine Vorschubbewegung ausführt, die auf einen mittels einer Spindelmutter an die Spindel angekoppelten Mitnehmer umgesetzt ist, welcher über die Kupplung mit dem Zuhalteelement gekoppelt ist.

Dabei ist der Mitnehmer mittels des Zylinderstifts mit der Kupplung verbunden und damit vorschubsicher gelagert.

Die so ausgebildete Zuhaltevorrichtung weist einen kompakten, robusten Aufbau auf.

Hierbei ist vorteilhaft, dass der Mitnehmer hohlzylindrisch ausgebildet ist, wobei der Innenraum des Mitnehmers eine Entkopplungsstrecke als Bestandteil der Entkopplungsmittel ausbildet, wobei die Spindel entlang der Entkopplungsstrecke führbar ist.

Zudem ist eine die Federkraft erzeugende Feder zwischen dem Mitnehmer und dem Entkopplungsmittel gelagert.

Damit wird mit geringem konstruktivem Aufwand eine mechanische Entkopplung der Zuhaltung ermöglicht.

Gemäß einer vorteilhaften Ausführungsform ist innerhalb des Zuhalteelements ein Kabel geführt, wobei an dem Zuhalteelement ist eine Kabelumlenkung angeordnet ist, mittels derer das Kabel entlang einer Bahnkurve zwangsgeführt ist.

Dabei ist das Kabel an ein im Zuhalteelement integriertes Sensormittel zur Kontrolle der Zuhaltung angeschlossen.

Weiterhin ist das an der Kabelumlenkung ausmündende Kabel seitlich neben den Komponenten der Zuhaltevorrichtung geführt.

Mit der Kabelumlenkung wird ein Abknicken oder sonstiges Beschädigen bei dem Hinausführen des Kabels aus dem Bereich des Zuhalteelements auf einfache Weise sicher verhindert. Da das an dem Zuhalteelement herausgeführte Kabel in Abstand neben den weiteren Komponenten der Zuhaltevorrichtung verläuft, wird auf einfache Weise verhindert, dass das Kabel bei einer Bewegung des Zuhalteelements in Eingriff mit diesen Komponenten kommt oder abgeknickt wird.

Weiter vorteilhaft ist das Zuhalteelement in eine einer Freigabestellung entsprechenden unteren Endlage einbringbar, welche mittels einer Sensorik kontrollierbar ist.

Dadurch wird eine sensorgesteuerte Zuhaltung ermöglicht, wobei das Zuhalteelement durch die Sensorik kontrolliert zwischen den die Sperrstellung und die Freigabestellung definierenden Endlagen bewegt wird.

Insbesondere ist hierbei vorteilhaft, dass das Zuhalteelement in eine einer Freigabestellung entsprechenden unteren Endlage einbringbar ist, welche mittels einer Sensorik kontrollierbar ist. Dadurch ist die untere Position der Spindelmutter bestimmt. Ausgehend hiervon sind die weiteren Positionen der Spindelmutter mittels eines Drehgebers des elektrischen Antriebs bestimmt.

Die Erfindung wird im Folgenden anhand der Zeichnungen erläutert. Es zeigen:
- Figur 1: Schematische Darstellung eines Ausführungsbeispiels der erfindungsgemäßen Zuhaltevorrichtung .
- Figur 2: Detaildarstellung der Zuhaltevorrichtung gemäß Figur 1 mit deren Kupplung.
- Figur 3: Detaildarstellung der Zuhaltevorrichtung gemäß Figur 1 mit deren Zuhalteelement und einer Kabelumlenkung.
- Figur 4 a-c: Ablaufdiagramm für eine bistabile Zuhaltung mit der Zuhaltevorrichtung gemäß Figur 1.
- Figur 5 a-c: Ablaufdiagramm für eine Fangfunktion mit der Zuhaltevorrichtung gemäß Figur 1.

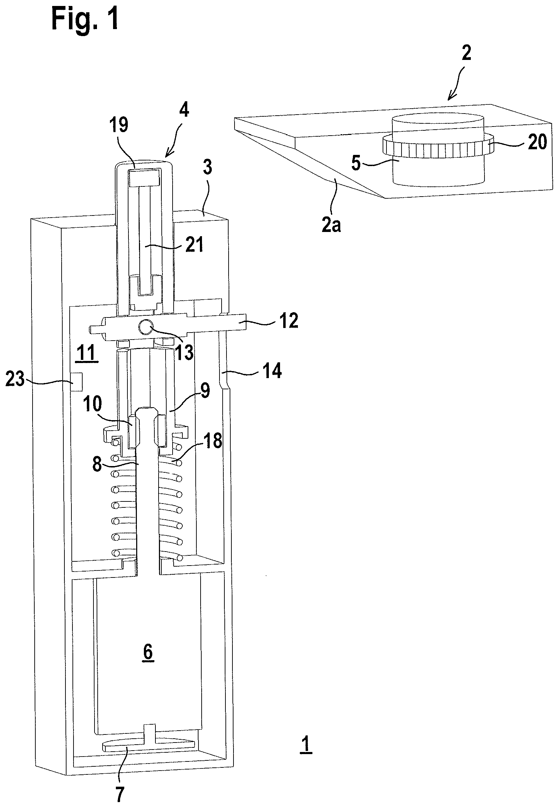

Figur 1 zeigt ein Ausführungsbeispiel der erfindungsgemäßen Zuhaltevorrichtung 1. Die Zuhaltevorrichtung 1 dient zur Zuhaltung eines Betätigers 2, der Bestandteil einer Sicherheitseinrichtung mit einem nicht dargestellten Sicherheitsschalter ist.

Mit dieser Sicherheitseinrichtung erfolgt beispielsweise die Sicherung einer Schutztür als Zugang zu einem Gefahrenbereich. Der Betätiger 2 kann an der Schutztür angeordnet sein, der Sicherheitsschalter kann an einen die Türöffnung, die mit der Schutztür verschlossen wird, begrenzenden Rahmen angeordnet werden.

Typischerweise wird die Schließstellung einer Schutztür dadurch kontrolliert, dass ein RFID Lesegerät im Sicherheitsschalter das codierte Signal eines Transponders im Betätiger liest.

Zusätzlich zu dieser Verriegelung erfolgt eine Zuhaltung des Betätigers 2 mit der in Figur 1 dargestellten Zuhaltevorrichtung 1.

Die Zuhaltevorrichtung 1 weist zur Aufnahme deren einzelnen Komponenten ein Gehäuse 3 auf. Zur Durchführung der Zuhaltung kann ein Zuhalteelement 4, das im vorliegenden Fall von einem Zuhaltebolzen gebildet ist, über eine Öffnung an der Oberseite des Gehäuses 3 ausgefahren werden und in eine Ausnehmung 5 an der Unterseite des Betätigers 2 eingefahren werden.

Im unteren Bereich des Gehäuses 3 der Zuhaltevorrichtung 1 ist ein elektrischer Antrieb 6 gelagert, der einen Elektromotor mit einem Planetengetriebe aufweist. Die aktuelle Drehposition des Elektromotors wird mit einem Drehgeber 7 erfasst.

Mit dem elektrischen Antrieb 6 wird eine Spindel 8 angetrieben. Das vordere Ende der Spindel 8 ist mit einem Mitnehmer 9 verbunden. Der Mitnehmer 9 ist hohlzylindrisch ausgebildet. Das vordere Ende der Spindel 8 ragt über die Unterseite des Mitnehmers 9 in dessen Innenraum und ist dort mittels einer Spindelmutter 10 gelagert.

Das Zuhalteelement 4 ist mittels einer Kupplung 11 an das obere Ende des Mitnehmers 9 gekoppelt.

Eine Drehbewegung der vom elektrischen Antrieb 6 angetriebenen Spindel 8 wird durch die Kupplung 11 und die Spindelmutter 10 in eine reine Translationsbewegung des Zuhalteelements 4 umgesetzt.

Diese Kupplung 11 weist einen Querstift 12 und einen Zylinderstift 13 auf, deren Längsachsen senkrecht zueinander orientiert sind und jeweils senkrecht zur Längsachse des Mitnehmers 9 und des hohlzylindrischen Zuhalteelements 4 verlaufen.

Die Längsachsen der Spindel 8, des Mitnehmers 9 und des Zuhalteelements 4 verlaufen entlang der Symmetrieachsen des Gehäuses 3.

Der Querstift 12 ist in einer Längsführung 14 in Form eines Langlochs im Gehäuse 3 geführt. Die Längsachse des Langlochs verläuft in Längsrichtung des Gehäuses 3.

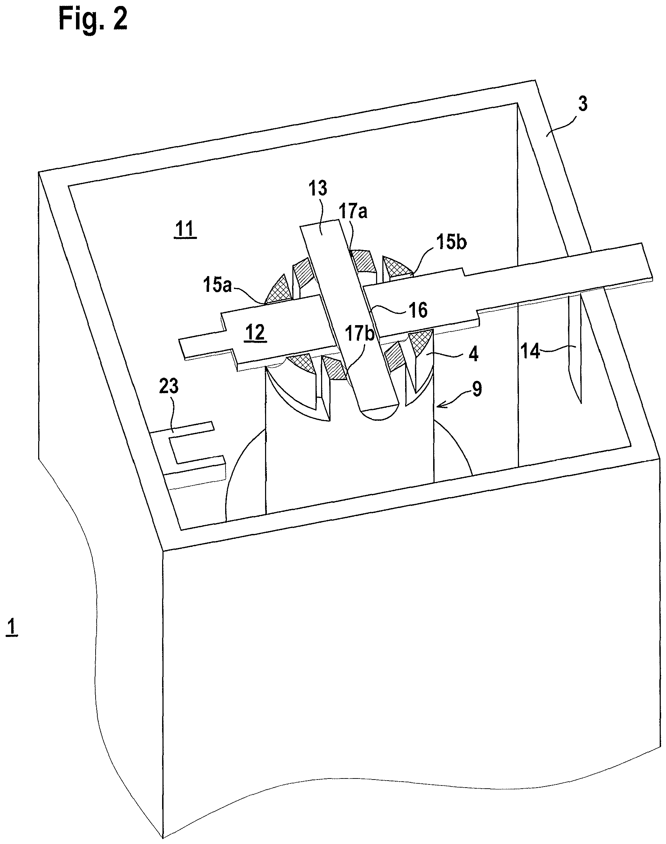

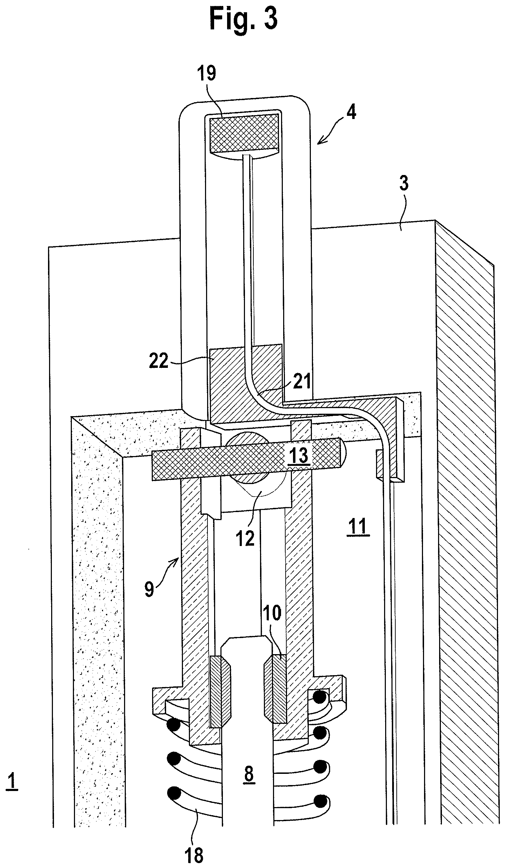

Wie die Figuren 2 und 3 zeigen, liegt der Querstift 12 mit Spiel in Ausnehmungen 15a, 15b der Wand des Zuhalteelements 4. Der Zylinderstift 13 liegt mit Spiel in einer Ausnehmung 16 des Querstifts 12 und weiterhin in Ausnehmungen 17a, 17b in der Wand des Mitnehmers 9, wodurch der Querstift 12 gesichert ist. Durch die so ausgebildete Kupplung 11 erfolgt in axialer Richtung eine drehsteife und spielfreie Kopplung des Zuhalteelements 4 an die Spindel 8 und damit an den elektrischen Antrieb 6, sodass mittels des elektrischen Antriebs 6 exakte Hubbewegungen des Zuhalteelements 4 durchgeführt werden können. Durch die Führung des Querstifts 12 in der Längsführung 14 ist gewährleistet, dass die Drehbewegung des elektrischen Antriebs 6 in eine reine Translationsbewegung des Mitnehmers 9 und damit des Zuhalteelements 4 umgesetzt wird. Durch die Lagerung des Querstifts 12 und des Zylinderstifts 13 mit Spiel in der senkrecht zur Längsachse des Zuhalteelements 4 orientierten Ebene wird ein lateraler Toleranzausgleich bewirkt, das heißt Bauteiltoleranzen werden dadurch berücksichtigt, sodass diese die Führung des Zuhalteelements 4 nicht beeinträchtigen.

Wie aus Figur 1 weiter ersichtlich, ist zwischen der Unterseite des Mitnehmers 9 und der Oberseite des elektrischen Antriebs 6 eine Feder 18 angeordnet, mit der eine in axialer Richtung verlaufende Federkraft generiert wird.

Die Figuren 1 und 3 zeigen das Zuhalteelement 4 in seiner Sperrstellung, in welcher dieses über die Oberseite des Gehäuses 3 hinaus ausgefahren ist. Die hierfür erforderliche Stellbewegung wird mit dem elektrischen Antrieb 6 bewirkt. Wie die Figuren 1 und 3 weiter zeigen, liegt dabei das obere Ende der Spindel 8 mit der Spindelmutter 10 im unteren Bereich des Innenraums des hohlzylindrischen Mitnehmers 9. Dieser Innenraum bildet eine Entkopplungsstrecke und damit ein Entkopplungsmittel für das Zuhalteelement 4. Mittels der Entkopplungsstrecke wird eine mechanische Entriegelung des Zuhalteelements 4, entkoppelt vom elektrischen Antrieb 6, ermöglicht. Das Zuhalteelement 4 kann nämlich aus seiner Sperrstellung in seine Freigabestellung, in welcher das Zuhalteelement 4 komplett in das Gehäuse 3 eingefahren ist, rein mechanisch und entkoppelt vom elektrischen Antrieb 6 angebracht werden, da sich bei Ausüben einer Druckkraft von oben auf das Zuhalteelement 4 die Spindelmutter 10 entlang der Entkopplungsstrecke bewegen kann. Damit wird das Zuhalteelement 4 unabhängig vom elektrischen Antrieb 6 und gegen die Federkraft der Feder 18 von der Sperrstellung in die Freigabestellung überführt. Dies kann für eine Fluchtentriegelung der Zuhaltevorrichtung 1 genutzt werden.

Wie Figur 1 zeigt, befindet sich im oberen Bereich des Innenraums des hohlzylindrischen Zuhalteelements 4 ein Sensormittel 19. Ein hierzu korrespondierendes Sensormittel 20 befindet sich im Betätiger 2. Wenn zur Zuhaltung des Betätigers 2 das Zuhalteelement 4 in die Ausnehmung 5 des Betätigers 2 eingefahren ist, generieren die Sensormittel 19, 20 ein entsprechendes Signal. Somit wird mit diesen Sensormitteln 19, 20 die Zuhaltung kontrolliert. Die Sensormittel 19, 20 können beispielsweise von einem Näherungsschalter oder einem RFID-System gebildet sein.

Das Sensormittel 19 ist über ein Kabel 21 an eine Elektronik am elektrischen Antrieb 6 angeschlossen. Wie insbesondere Figur 3 zeigt, verläuft das Kabel 21 vom Sensormittel 19 ausgehend im Innenraum des Zuhalteelements 4 in vertikaler Richtung. Dann wird das Kabel 21 in einer Kabelumlenkung 22 geführt. Die Kabelumlenkung 22 bildet eine Zwangsführung für das Kabel 21 derart, dass dieses zweimal um 90° abgelenkt wird. Wesentlich hierbei ist, dass das Kabel 21 in der Kabelumlenkung 22 in relativ großen Krümmungsradien umgelenkt wird und dabei spielarm zwangsgeführt ist, sodass ein Abknicken oder eine sonstige Beschädigung des Kabels 21 vermieden wird. Das an der Kabelumlenkung 22 austretende Kabel 21 verläuft dann in vertikaler Richtung zur Elektronik und ist dort angeschlossen. Wesentlich hierbei ist, dass das Kabel 21 in Abstand zu den Komponenten der Zuhaltevorrichtung 1 verläuft, sodass auch bei einer Bewegung des Zuhalteelements 4 ein Abknicken oder Einklemmen des Kabels 21 vermieden wird.

Das Zuhalteelement 4 kann mittels des elektrischen Antriebs 6 zwischen der Sperrstellung und der Freigabestellung verfahren werden, wobei diese durch nicht dargestellte Endanschläge vorgegeben sein können. Die Stellbewegungen des Zuhalteelements 4 erfolgen dabei sensorgesteuert. In der Zuhaltevorrichtung 1 ist hierzu vorteilhaft eine geeignete Sensorik vorgesehen, die im einfachsten Fall von einem einzelnen Sensorelement 23 gebildet sein kann. Mit dem Sensorelement 23 wird die untere Endlage des Zuhalteelements 4 erfasst. Wird die Spindelmutter 10 in ihre untere Endlage verfahren, wird diese mit dem Sensorelement 23 indirekt über das Erfassen der unteren Endlage des Zuhalteelements 4 bestimmt. Diese untere Endlage dient als Referenzposition. Davon ausgehend werden mit dem Drehgeber 7 des elektrischen Antriebs 6 die Relativpositionen der Spindelmutter 10 relativ zur Referenzposition erfasst. Damit wird in der Zuhaltevorrichtung 1 nur ein einziges Sensorelement 23 benötigt.

Mit der Zuhaltevorrichtung 1 gemäß Figur 1 kann einerseits eine bistabile Zuhaltung als auch eine Fangfunktion zur Durchführung einer Zuhaltung realisiert werden. Die Zuhaltevorrichtung 1 kann wahlweise mit einer bistabilen Zuhaltung oder einer Fangfunktion betrieben werden. Die Auswahl kann herstellerseitig durch eine geeignete Softwarevariante realisiert werden. Alternativ kann die Auswahl durch Eingabe eines Programmierbefehls einer autorisierten Person in die Steuerung der Zuhaltevorrichtung 1 erfolgen.

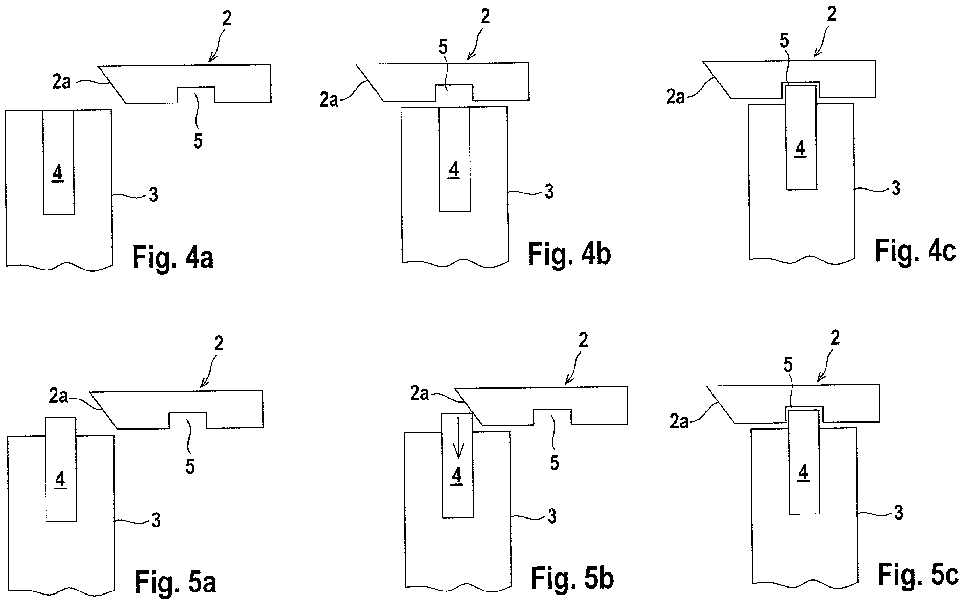

Die Figuren 4 a - c zeigen den Ablauf einer bistabilen Zuhaltung die komplett über den elektrischen Antrieb 6 gesteuert wird.

Wie aus Figur 1 und auch aus den Figuren 4 a - c ersichtlich, weist der Betätiger 2 an seinem vorderen Ende als Eingriffselement eine Schrägfläche 2a auf. Dieses Eingriffselement wird bei der bistabilen Zuhaltung nicht benötigt.

Figur 4a zeigt den Ausgangszustand, wenn sich der Betätiger 2 noch nicht im Bereich der Zuhaltevorrichtung 1 befindet. Das Zuhalteelement 4 ist mittels des elektrischen Antriebs 6 in seine Freigabestellung eingefahren, sodass das Zuhalteelement komplett in das Gehäuse 3 der Zuhaltevorrichtung 1 eingefahren werden kann. Der Betätiger 2 kann nun durch Schwenken oder Verschieben der Schutztür in den Bereich der Zuhaltevorrichtung 1 eingebracht werden, was der Fall ist, wenn die Schutztür in ihrer Schließstellung ist und der Betätiger 2 im Sicherheitsschalter verriegelt ist. Dies ist in Figur 4b dargestellt.

Nun kann der Betätiger 2 mittels des elektrischen Antriebs 6 in seine Sperrstellung ausgefahren werden, sodass er in die Aufnahme des Betätigers 2 ragt (Figur 4c), wodurch die Zuhaltung des Betätigers 2 bewirkt ist.

Die Zuhaltung kann dann dadurch wieder gelöst werden, dass mittels des elektrischen Antriebs 6 das Zuhalteelement 4 in die Freigabestellung überführt wird.

Die Figuren 5a - 5c zeigen den Ablauf bei der Fangfunktion.

Der Ausgangszustand (Figur 5a), bei welchem der Betätiger 2 noch nicht im Bereich der Zuhaltevorrichtung 1 ist, ist nun derart, dass das Zuhalteelement 4 mittels des elektrischen Antriebs 6 bereits in der Sperrstellung verfahren ist.

Wenn nun der Betätiger 2 in den Bereich der Zuhaltevorrichtung 1 eingefahren wird, wird der Betätiger 2 mit der Schrägfläche 2a gegen das Zuhalteelement 4 geführt (Figur 5b). Durch die Entkopplungsmittel der Zuhaltevorrichtung 1 kann das Zuhalteelement 4 nach unten ausweichen, das heißt durch die von dem Betätiger 2 über die Schrägfläche 2a ausgewirkte mechanische Kraft wird das Zuhalteelement 4 vom elektrischen Antrieb 6 entkoppelt und gegen die Federkraft der Feder 18 nach unten in die Freigabestellung gedrückt.

Befindet sich der Betätiger 2 in seiner Verriegelungsposition, liegt dessen Ausnehmung 5 dicht oberhalb des Zuhalteelements 4. Durch die Federkraft der Feder 18 wird dann das Zuhalteelement 4 in seine Sperrstellung überführt, in der das Zuhalteelement in die Ausnehmung 5 greift (Figur 5c), das heißt die Zuhaltung ist entkoppelt vom elektrischen Antrieb 6.

Zur Lösung der Zuhaltung wird dann das Zuhalteelement 4 mittels des elektrischen Antriebs 6 in die Freigabestellung überführt.

### Bezugszeichenliste

- (1): Zuhaltevorrichtung
- (2): Betätiger
- (2a): Schrägfläche
- (3): Gehäuse
- (4): Zuhalteelement
- (5): Ausnehmung
- (6): elektrischer Antrieb
- (7): Drehgeber
- (8): Spindel
- (9): Mitnehmer
- (10): Spindelmutter
- (11): Kupplung
- (12): Querstift
- (13): Zylinderstift
- (14): Längsführung
- (15a, 15b): Ausnehmungen
- (16): Ausnehmung
- (17a, 17b): Ausnehmungen
- (18): Feder
- (19): Sensormittel
- (20): Sensormittel
- (21): Kabel
- (22): Kabelumlenkung
- (23): Sensorelement

## Patentansprüche

1. Zuhaltevorrichtung (1) mit einem mittels eines elektrischen Antriebs (6) betätigbaren Zuhalteelement (4), wobei mittels des elektrischen Antriebs (6) das Zuhalteelement (4) in eine Sperrstellung derart einbringbar ist, dass ein Betätiger (2) eines Sicherheitsschalters mit diesem zugehalten werden kann, wobei das Zuhalteelement (4) mit dem elektrischen Antrieb (6) über eine Kupplung (11) so verbunden ist, dass eine Drehbewegung des elektrischen Antriebs (6) in eine reine Translationsbewegung des Zuhalteelements (4) umgesetzt ist, wobei die Kupplung (11) einen Querstift (12) aufweist und wobei der Querstift (12) in einer Längsführung (14) geführt ist, **dadurch gekennzeichnet, dass** die Kupplung (11) einen quer zu dem Querstift (12) verlaufenden Zylinderstift (13) aufweist, wobei der Zylinderstift (13) den Querstift (12) sichert, dass mit der Kupplung (11) zwischen dem Zuhalteelement (4) und dem elektrischen Antrieb (6) in axialer Richtung eine drehsteife und spielfreie Kopplung bewirkt ist und in lateraler Richtung ein Toleranzausgleich dieser Einheiten bewirkt ist, wobei die Längsachsen des Querstifts (12) und des Zylinderstifts (13) quer zur Längsachse des Zuhalteelements (4) verlaufen, wobei der Querstift (12) mit Spiel in einer Aufnahme des Zuhalteelements (4) gelagert ist und wobei der Zylinderstift (13) mit Spiel in einer Aufnahme des Querstifts (12) gelagert ist.

2. Zuhaltevorrichtung (1) nach Anspruch 1, **dadurch gekennzeichnet, dass** mit dieser eine bistabile Zuhaltung durchführbar ist, gemäß derer mittels des elektrischen Antriebs (6) das Zuhalteelement (4) in die Sperrstellung einfahrbar ist, wobei in dieser das Zuhalteelement (4) in eine Aufnahme des Betätigers (2) greift, wodurch dessen Zuhaltung bewirkt ist, und wobei mittels des elektrischen Antriebs (6) das Zuhalteelement (4) aus der Sperrstellung ausfahrbar ist.

3. Zuhaltevorrichtung (1) nach einem der Ansprüche 1 oder 2, **dadurch gekennzeichnet, dass** diese Entkopplungsmittel aufweist, mittels derer das Zuhalteelement (4) vom elektrischen Antrieb (6) entkoppelt gegen eine Federkraft aus der Sperrstellung herausbewegbar ist.

4. Zuhaltevorrichtung (1) nach Anspruch 3, **dadurch gekennzeichnet, dass** mittels der Entkopplungsmittel eine Fangfunktion für den Betätiger (2) realisierbar ist.

5. Zuhaltevorrichtung (1) nach Anspruch 4, **dadurch gekennzeichnet, dass** die Fangfunktion dadurch realisiert ist, dass mittels eines Engriffselements des Betätigers (2) das Zuhalteelement (4) mechanisch entkoppelt vom elektrischen Antrieb (6) aus einer Sperrstellung herausbewegt ist, und dass dann, wenn die Aufnahme des Betätigers (2) im Bereich des Zuhalteelements (4) liegt, dieses durch die Federkraft in die Sperrstellung zurückbewegt ist und in die Aufnahme des Betätigers (2) greift.

6. Zuhaltevorrichtung (1) nach einem der Ansprüche 4 oder 5, **dadurch gekennzeichnet, dass** diese wahlweise mit einer bistabilen Zuhaltung oder einer Fangfunktion betreibbar ist.

7. Zuhaltevorrichtung (1) nach Anspruch 6, **dadurch gekennzeichnet, dass** die Funktionalität der bistabilen Zuhaltung oder der Fangfunktion durch eine Softwareversion der Zuhaltevorrichtung (1) definiert ist oder durch einen Programmierbefehl vorgebbar ist.

8. Zuhaltevorrichtung (1) nach einem der Ansprüche 1 - 7, **dadurch gekennzeichnet, dass** der elektrische Antrieb (6) einen Elektromotor mit einem Planetengetriebe aufweist, wobei abtriebseitig am elektrischen Antrieb (6) eine Spindel (8) vorgesehen ist, deren Drehbewegung auf einen mittels einer Spindelmutter (10) an die Spindel (8) angekoppelten Mitnehmer (9) als Vorschubbewegung umgesetzt ist, welcher über die Kupplung (11) mit dem Zuhalteelement (4) gekoppelt ist.

9. Zuhaltevorrichtung (1) nach Anspruch 8, **dadurch gekennzeichnet, dass** der Mitnehmer (9) mittels des Zylinderstifts (13) mit der Kupplung (11) verbunden ist und damit verdrehsicher gelagert ist.

10. Zuhaltevorrichtung (1) nach einem der Ansprüche 8 oder 9, **dadurch gekennzeichnet, dass** der Mitnehmer (9) hohlzylinderisch ausgebildet ist, wobei der Innenraum des Mitnehmers (9) eine Entkopplungsstrecke als Bestandteil der Entkopplungsmittel ausbildet, wobei die Spindel (8) entlang der Entkopplungsstrecke führbar ist.

11. Zuhaltevorrichtung (1) nach einem der Ansprüche 8 - 10, **dadurch gekennzeichnet, dass** eine die Federkraft erzeugende Feder (18) zwischen dem Mitnehmer (9) und dem elektrischen Antrieb (6) gelagert ist.

12. Zuhaltevorrichtung (1) nach einem der Ansprüche 1 - 11, **dadurch gekennzeichnet, dass** innerhalb des Zuhalteelements (4) ein Kabel (21) geführt ist, wobei an das Zuhalteelement (4) eine Kabelumlenkung (22) angeordnet ist, mittels derer das Kabel (21) entlang einer Bahnkurve zwangsgeführt ist.

13. Zuhaltevorrichtung (1) nach Anspruch 12, **dadurch gekennzeichnet, dass** das an der Kabelumlenkung (22) ausmündende Kabel (21) seitlich neben den Komponenten der Zuhaltevorrichtung (1) geführt ist.

14. Zuhaltevorrichtung (1) nach einem der Ansprüche 1 - 7, **dadurch gekennzeichnet, dass** das Zuhalteelement (4) in eine einer Freigabestellung entsprechenden unteren Endlage einbringbar ist, welche mittels einer Sensorik kontrollierbar ist, wodurch die untere Position der Spindelmutter (10) bestimmt ist, und dass ausgehend hiervon die weiteren Positionen der Spindelmutter (10) mittels eines Drehgebers (7) des elektrischen Antriebs bestimmt sind.

## Claims

1. Fixing device (1) with a fixing element (4) actuable by means of an electric drive (6), wherein the fixing element (4) can be brought by means of the electric drive (6) into a blocking setting in such a way that an actuator (2) of a safety switch can be fixed by this, wherein the fixing element (4) is so connected with the electric drive (6) by way of a coupling (11) that a rotational movement of the electric drive (6) is converted into a pure translational movement of the fixing element (4), wherein the coupling (11) comprises a transverse pin (12) and wherein the transverse pin (12) is guided in a longitudinal guide (14), **characterised in that** the coupling (11) comprises a cylinder pin (13) extending transversely to the transverse pin (12), wherein the cylinder pin (13) secures the transverse pin (12), and that a torsionally stiff and play-free coupling is produced in axial direction by the coupling (11) between the fixing element (4) and the electric drive (6) and compensation for tolerance of these units is provided in lateral direction, wherein the longitudinal axes of the transverse pin (12) and the cylinder pin (13) extend transversely to the longitudinal axis of the fixing element (4), wherein the transverse pin (12) is mounted with play in a receptacle of the fixing element (4) and wherein the cylinder pin (13) is mounted with play in a receptacle of the transverse pin (12).

2. Fixing device (1) according to claim 1, **characterised in that** a bistable fixing can be effected by this, in accordance with which the fixing element (4) is movable into the blocking setting by means of the electric drive (6), wherein in this the fixing element (4) engages in a receptacle of the actuator (2), whereby fixing thereof is produced, and wherein the fixing element (4) is movable out of the blocking setting by means of the electric drive (6).

3. Fixing device (1) according to one of claims 1 and 2, **characterised in that** this comprises decoupling means by way of which the fixing element (4) decoupled from the electric drive (6) is movable out of the blocking setting against a spring force.

4. Fixing device (1) according to claim 3, **characterised in that** a catch function for the actuator (2) can be realised by way of the decoupling means.

5. Fixing device (1) according to claim 4, **characterised in that** the catch function is realised **in that** the fixing element (4) mechanically decoupled from the electric drive (6) is moved out of a blocking setting by means of an engagement element of the actuator (2) and that when the receptacle of the actuator (2) lies in the region of the fixing element (4) this is moved back by the spring force into the blocking setting and engages in the receptacle of the actuator (2).

6. Fixing device (1) according to one of claims 4 and 5, **characterised in that** this is operable selectably by a bistable fixing or a catch function.

7. Fixing device (1) according to claim 6, **characterised in that** the functionality of the bistable fixing or the catch function is defined by a software version of the fixing device (1) or is predeterminable by a programming command.

8. Fixing device (1) according to any one of claims 1 to 7, **characterised in that** the electric drive (6) comprises an electric motor with a planetary transmission, wherein a spindle (8) is provided at the electric drive (6) at the drive output side, the rotational movement of the spindle being converted into an advance movement at an entrainer (9) which is coupled to the spindle (8) by means of a spindle nut (10) and which is coupled to the fixing element (4) by way of the coupling (11).

9. Fixing device (1) according to claim 8, **characterised in that** the entrainer (9) is connected with the coupling (11) by means of the cylinder pin (13) and is thus mounted to be secure against twisting.

10. Fixing device (1) according to one of claims 8 and 9, **characterised in that** the entrainer (9) is of hollow-cylindrical construction, wherein the interior space of the entrainer (9) forms a decoupling path as a component of the decoupling means, wherein the spindle (8) can be guided along the decoupling path.

11. Fixing device (1) according to any one of claims 8 to 10, **characterised in that** a spring (18) producing the spring force is mounted between the entrainer (9) and the electric drive (6).

12. Fixing device (1) according to any one of claims 1 to 11, **characterised in that** a cable (21) is guided within the fixing element (4), wherein arranged at the fixing element (4) is cable deflecting means (22) by way of which the cable (21) is constrainedly guided along a path curve.

13. Fixing device (1) according to claim 12, **characterised in that** the cable (21) exiting the cable deflecting means (22) is guided laterally adjacent to the components of the fixing device (1).

14. Fixing device (1) according to any one of claims 1 to 7, **characterised in that** the fixing element (4) can be brought into a lower end position which corresponds with a release setting and by means of which a sensor system is controllable, whereby the lower position of the spindle nut (10) is determined, and that starting from that the further positions of the spindle nut (10) are determined by means of a rotation transmitter (7) of the electric drive.

## Revendications

1. Dispositif de verrouillage (1) équipé d'un élément de verrouillage (4) pouvant être actionné au moyen d'un entraînement électrique (6), ledit élément de verrouillage (4) pouvant être amené à une position de blocage, au moyen dudit entraînement électrique (6), de façon telle qu'un actionneur (2) d'un interrupteur de sécurité puisse être verrouillé au moyen dudit élément, lequel élément de verrouillage (4) est relié audit entraînement électrique (6) par l'intermédiaire d'un accouplement (11), de telle sorte qu'un mouvement rotatoire dudit entraînement électrique (6) soit converti en un pur mouvement translatoire dudit élément de verrouillage (4), ledit accouplement (11) étant doté d'une cheville transversale (12), laquelle cheville transversale (12) est guidée dans un guide longitudinal (14), **caractérisé par le fait que** l'accouplement (11) est muni d'un tenon cylindrique (13) s'étendant transversalement par rapport à la cheville transversale (12), ledit tenon cylindrique (13) arrêtant ladite cheville transversale (12) ; et **par le fait que** ledit accouplement (11) a pour effets d'instaurer un couplage rigide en torsion et exempt de jeu entre l'élément de verrouillage (4) et l'entraînement électrique (6), dans la direction axiale, et d'instaurer une compensation de tolérances de ces ensembles unitaires, dans la direction latérale, les axes longitudinaux de ladite cheville transversale (12) et dudit tenon cylindrique (13) s'étendant transversalement par rapport à l'axe longitudinal dudit élément de verrouillage (4), sachant que ladite cheville transversale (12) est montée avec jeu dans un logement dudit élément de verrouillage (4), et sachant que ledit tenon cylindrique (13) est monté avec jeu dans un logement de ladite cheville transversale (12).

2. Dispositif de verrouillage (1) selon la revendication 1, **caractérisé par le fait que** ce dernier permet l'exécution d'un verrouillage bistable, conformément auquel l'élément de verrouillage (4) peut être amené à la position de blocage au moyen de l'entraînement électrique (6), sachant que, dans cette position, ledit élément de verrouillage (4) pénètre dans un logement de l'actionneur (2), ce qui provoque le verrouillage de celui-ci, et sachant que ledit élément de verrouillage (4) peut être extrait de ladite position de blocage au moyen dudit entraînement électrique (6).

3. Dispositif de verrouillage (1) selon l'une des revendications 1 ou 2, **caractérisé par le fait que** ce dernier comporte des moyens de découplage à l'aide desquels l'élément de verrouillage (4) peut être extrait de la position de blocage, à l'état découplé d'avec l'entraînement électrique (6), en opposition à une force élastique.

4. Dispositif de verrouillage (1) selon la revendication 3, **caractérisé par le fait qu'**une fonction d'interception, ciblant l'actionneur (2), peut être concrètement exécutée à l'aide des moyens de découplage.

5. Dispositif de verrouillage (1) selon la revendication 4, **caractérisé par le fait que** la fonction d'interception est concrètement exécutée en ce sens que l'élément de verrouillage (4) est extrait d'une position de blocage, à l'état mécaniquement découplé d'avec l'entraînement électrique (6), au moyen d'un élément de venue en prise de l'actionneur (2) ; et que, lorsque le logement dudit actionneur (2) se trouve ensuite dans la région dudit élément de verrouillage (4), celui-ci est renvoyé à ladite position de blocage, par la force élastique, puis pénètre dans ledit logement de l'actionneur (2).

6. Dispositif de verrouillage (1) selon l'une des revendications 4 ou 5, **caractérisé par le fait que** ce dernier peut être exploité, sélectivement, avec un verrouillage bistable ou avec une fonction d'interception.

7. Dispositif de verrouillage (1) selon la revendication 6, **caractérisé par le fait que** la fonctionnalité du verrouillage bistable ou de la fonction d'interception est fermement définie par une version de logiciel dudit dispositif de verrouillage (1), ou peut être préétablie par une commande de programmation.

8. Dispositif de verrouillage (1) selon l'une des revendications 1 - 7, **caractérisé par le fait que** l'entraînement électrique (6) est muni d'un moteur électrique conjugué à un engrenage planétaire, sachant qu'il est prévu côté sortie, sur ledit entraînement électrique (6), une broche (8) dont le mouvement rotatoire est répercuté, en tant que mouvement d'avance, sur un organe d'entraînement (9) qui est couplé à ladite broche (8) au moyen d'un écrou (10) à broche, et est couplé à l'élément de verrouillage (4) par l'intermédiaire de l'accouplement (11).

9. Dispositif de verrouillage (1) selon la revendication 8, **caractérisé par le fait que** l'organe d'entraînement (9) est relié à l'accouplement (11) au moyen du tenon cylindrique (13), et s'en trouve ainsi monté avec blocage rotatif.

10. Dispositif de verrouillage (1) selon l'une des revendications 8 ou 9, **caractérisé par le fait que** l'organe d'entraînement (9) est de réalisation cylindrique creuse, l'espace interne dudit organe d'entraînement (9) matérialisant un trajet de découplage faisant partie intégrante des moyens de découplage, la broche (8) pouvant être guidée le long dudit trajet de découplage.

11. Dispositif de verrouillage (1) selon l'une des revendications 8 - 10, **caractérisé par le fait qu'**un ressort (18), engendrant la force élastique, est monté entre l'organe d'entraînement (9) et l'entraînement électrique (6).

12. Dispositif de verrouillage (1) selon l'une des revendications 1 - 11, **caractérisé par le fait qu'**un câble (21) est guidé à l'intérieur de l'élément de verrouillage (4), un déflecteur de câblage (22), au moyen duquel ledit câble (21) est guidé à force le long d'une trajectoire curviligne, étant implanté sur ledit élément de verrouillage (4).

13. Dispositif de verrouillage (1) selon la revendication 12, **caractérisé par le fait que** le câble (21), débouchant au niveau du déflecteur de câblage (22), est guidé latéralement à côté des composants dudit dispositif de verrouillage (1).

14. Dispositif de verrouillage (1) selon l'une des revendications 1 - 7, **caractérisé par le fait que** l'élément de verrouillage (4) peut être amené à une position extrême inférieure qui correspond à une position de libération et peut être contrôlée au moyen d'un ensemble de détection, l'emplacement inférieur de l'écrou (10) à broche s'en trouvant ainsi déterminé ; et **par le fait que**, sur cette base, les autres emplacements dudit écrou (10) à broche sont déterminés au moyen d'un codeur rotatif (7) de l'entraînement électrique.
